# EUROPEAN PATENT SPECIFICATION

(11) **EP 4 432 430 B1**
(45) Date of publication and mention of the grant of the patent: **26.08.2026**
(21) Application number: 22911994.6
(22) Date of filing: 22.12.2022
(51) Int. Cl.: H01M 50/105, H01M 50/129, H01M 50/121, H01M 50/124, H01M 50/119

(54) **METHOD FOR MANUFACTURING POUCH CASE FOR SECONDARY BATTERY**
VERFAHREN ZUR HERSTELLUNG EINES BEUTELGEHÄUSES FÜR EINE SEKUNDÄRBATTERIE
PROCÉDÉ DE FABRICATION DE BOÎTIER DE TYPE POCHE POUR BATTERIE SECONDAIRE

(30) Priority: 23.12.2021 KR 20210186151
(43) Date of publication of application: 18.09.2024
(73) Proprietor: LG Energy Solution, Ltd., Seoul 07335 (KR)
(72) Inventor: HWANG, Ji Young, Daejeon 34122 (KR); SONG, Dae Woong, Daejeon 34122 (KR); KIM, Sang Hun, Daejeon 34122 (KR); CHOI, Yong Su, Daejeon 34122 (KR); YU, Hyung Kyun, Daejeon 34122 (KR)
(74) Representative: Plasseraud IP
(86) International application number: PCT/KR2022/021108
(87) International publication number: WO 2023/121361

(56) References cited:
- JP-A- 2001 291 497
- JP-A- 2015 153 694
- JP-A- 2016 195 113
- KR-A- 20190 015 246
- KR-A- 20210 047 469
- KR-B1- 100 752 806
- KR-B1- 101 837 234
- US-A1- 2017 274 622

## Description

### TECHNICAL FIELD

### Cross-reference to Related Applications

This application claims priority from Korean Patent Application No. 10-2021-0186151, filed on December 23, 2021.

### TECHNICAL FIELD

The present invention relates to a method for manufacturing a pouch case for a secondary battery, and more specifically, a method for manufacturing a pouch case for a secondary battery, the method including reducing cracks of a sealant layer of a pouch exterior for a secondary battery.

### BACKGROUND ART

In general, in order to manufacture a pouch case for a secondary battery, a pouch exterior for a secondary battery is pressed to a specific depth using a punch and molded. The shape of the pouch exterior for a secondary battery is deformed by a pressure caused by the punch and a cup part is formed. During the process, a pinhole or a crack may be formed on a barrier layer of the molded pouch exterior for a secondary battery, or wrinkles may be formed thereon, and a whitening phenomenon may occur in a sealant layer. The whitening phenomenon of the sealant layer is known as a phenomenon in which the surface of the sealant layer looks white due to fine cracks and microvoids generated by tensile stress when the pouch exterior for a secondary battery is molded.

Recently, in order to improve the performance of a secondary battery, there is a demand for a pouch case for a secondary battery having a deep molding depth and a large molding curve. However, when the pouch case for a secondary battery having a deep molding depth and a large molding curve is manufactured as described above, excessive tensile stress is applied to the sealant layer disposed inside the pouch case for a secondary battery, thereby intensifying the whitening phenomenon of the sealant layer. The whitening phenomenon of the sealant layer adversely affects the durability and insulation of the pouch case for a secondary battery and ultimately deteriorates the stability of a pouch-type secondary battery to be manufactured.
US 2017/274622, JP 2015 153694, KR 101 837 234, JP 2016 195113, JP 2001291497 and KR 20210047469 are known.

Therefore, there is a need for a method for manufacturing a pouch case for a secondary battery capable of reducing the degree of whitening of a sealant layer even under a molding condition having a deep molding depth and a large molding curve.

### DISCLOSURE OF THE INVENTION

### TECHNICAL PROBLEM

An aspect of the present invention provides a method for manufacturing a pouch case for a secondary battery capable of reducing the whitening of a sealant layer.

### TECHNICAL SOLUTION

According to an aspect of the present invention, there is provided a method for manufacturing a pouch case for a secondary battery according to claim 1.

### ADVANTAGEOUS EFFECTS

According to the present invention, the sealant layer of the molded pouch exterior for a secondary battery is heated, thereby reducing cracks and whitening of the sealant layer, and thus it is possible to manufacture a pouch case for a secondary battery having improved durability and stability.

### BRIEF DESCRIPTION OF THE DRAWINGS

The following drawings attached to the specification illustrate preferred embodiments of the present invention by example, and serve to enable technical concepts of the present invention to be further understood together with detailed description of the invention given below, and therefore the present invention should not be interpreted only with matters in such drawings:
FIG. 1 schematically illustrates a cross-section of a pouch exterior for a secondary battery;
FIG. 2 schematically illustrates a cross-section of a molded pouch exterior for a secondary battery;
FIG. 3 is an enlarged view illustrating the inner surface of the cup part of the molded pouch exterior for a secondary battery illustrated in FIG. 2;
FIG. 4 is a plan view of the molded pouch exterior for a secondary battery;
FIG. 5 is a photograph of the inside of a sealant layer of Comparative Example observed through an optical microscope;
FIG. 6 is a photograph of the surface of the sealant layer of Comparative Example observed through an optical microscope;
FIG. 7 is a photograph of the inside of a sealant layer of Example 1 observed through an optical microscope;
FIG. 8 is a photograph of the surface of the sealant layer of Example 1 observed through an optical microscope;
FIG. 9 is a photograph of the inside of a sealant layer of Example 2 observed through an optical microscope;
FIG. 10 is a photograph of the surface of the sealant layer of Example 2 observed through an optical microscope;
FIG. 11 is a photograph of the inside of a sealant layer of Example 3 observed through an optical microscope;
FIG. 12 is a photograph of the surface of the sealant layer of Example 3 observed through an optical microscope;
FIG. 13 is a photograph of the inside of a sealant layer of Example 4 observed through an optical microscope;
FIG. 14 is a photograph of the surface of the sealant layer of Example 4 observed through an optical microscope;
FIG. 15 is a photograph of the inside of a sealant layer of Example 5 observed through an optical microscope; and
FIG. 16 is a photograph of the surface of the sealant layer of Example 5 observed through an optical microscope.

### MODE FOR CARRYING OUT THE INVENTION

### Method for Manufacturing Pouch Case for Secondary Battery

The method for manufacturing a pouch case for a secondary battery according to claim 1 includes the following steps (S1) to (S3):
(S1) preparing a pouch exterior for a secondary battery including a structure in which a substrate layer, a barrier layer, and a sealant layer are sequentially stacked;
(S2) molding the pouch exterior for a secondary battery to form a cup part; and
(S3) reducing cracks of the sealant layer of the pouch exterior for a secondary battery.

The inventors of the present invention have found that after forming a cup part by molding a pouch exterior for a secondary battery, the sealant layer of the pouch exterior for a secondary battery is heated, thereby reducing the cracks and the whitening phenomenon of the sealant layer, and have completed the present invention.

Specifically, when the sealant layer of the pouch exterior for a secondary battery is heated after the cup part is formed by molding the pouch exterior for a secondary battery, the heating being applied by emitting infrared rays to the sealant layer, as set out in claim 1, materials contained in the sealant layer may be expanded and thus defects such as cracks or voids present inside the sealant layer may be filled. Accordingly, the durability of the sealant layer may be significantly improved, and the pouch case for a secondary battery including the sealant layer may also be significantly improved.

Hereinafter, steps (S1) to (S3) will be described in detail with reference to the drawings. However, the present invention is not limited to configuration illustrated in the drawings.

First, a pouch exterior for a secondary battery including a structure in which a substrate layer, a barrier layer, and a sealant layer are sequentially stacked is prepared (S1).

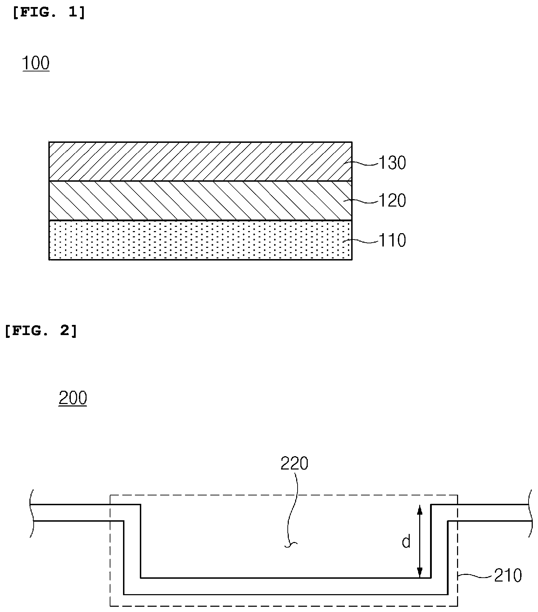

FIG. 1 schematically illustrates a cross-section of a pouch exterior for a secondary battery.

Referring to FIG. 1, a pouch exterior 100 for a secondary battery includes a structure in which a substrate layer 110, a barrier layer 120, and a sealant layer 130 are sequentially stacked.

The substrate layer 110 may be disposed at the outermost side of the pouch case for a secondary battery, and serve to protect the barrier layer 120, the sealant layer 130, and an electrode assembly (not shown) and an electrolyte (not shown) disposed inside the pouch case for a secondary battery from external materials, air, moisture, or the like.

The substrate layer 110 may include at least one selected from the group consisting of polyethylene, polypropylene, polyethylene terephthalate, and nylon. The substrate layer 110 includes the material, and thus can effectively protect the barrier layer 120, the sealant layer 130, the electrode assembly, and the electrolyte from external materials, air, moisture, or the like.

Although not shown in the drawings, the substrate layer 110 may include two or more layers, and specifically, the substrate layer 110 may include a first layer (not shown) and a second layer (not shown). The substrate layer 110 includes two or more layers, and thus can more effectively protect the barrier layer 120, the sealant layer 130, the electrode assembly, the electrolyte, and the like from external materials, air, moisture, or the like.

In addition, when the substrate layer 110 includes the first layer and the second layer, the first layer may include nylon, and the second layer may include polyethylene terephthalate. Since the first layer includes nylon, insulating properties between the barrier layer 120 and the second layer may be further secured, and since the second layer includes polyethylene terephthalate, foreign substances introduced from the outside of the pouch case for a secondary battery may be effectively blocked.

The substrate layer 110 may have a thickness of 10-50 µm, specifically 15-45 µm, and more specifically 18-35 µm. When the thickness of the substrate layer 110 satisfies the above numerical range, the substrate layer 110 may not be damaged even when the sealant layer 130 is sufficiently heated in step (S3) as described later, and may have excellent insulating properties.

The barrier layer 120 may serve to block the introduction of external materials, air, moisture, or the like into the pouch case for a secondary battery.

The barrier layer 120 may include metal materials, and specifically, the barrier layer 120 may be an aluminum (Al) alloy. Since the barrier layer 120 includes an aluminum alloy, the introduction of external materials, air, moisture, or the like into the pouch case for a secondary battery may be effectively blocked.

The barrier layer 120 may have a thickness of 20-80 µm, specifically, 25-65 µm, and more specifically, 30-60 µm. When the thickness of the barrier layer 120 satisfies the above numerical range, the barrier layer 120 may not be damaged and may have excellent insulating properties even when the sealant layer 130 is sufficiently heated in step (S3) as described later.

The sealant layer 130 may be disposed on the innermost side of the pouch case for a secondary battery, and serve to protect an electrode assembly, an electrolyte, or the like. In addition, parts of the sealant layer 130 may be fused to each other by heat and serve to seal the inside of the pouch case for a secondary battery. As a specific example, when the pouch case for a secondary battery is bisected and folded to contact each other, parts of the sealant layer 130 may be in contact with each other inside, and when heat is applied in the state, the parts of the sealant layer 130 may be fused to each other by heat. Accordingly, the inside of the pouch case for a secondary battery may be sealed.

The sealant layer 130 may include at least one selected from the group consisting of polyethylene, polypropylene, an ethylene propylene copolymer, a polypropylene-butylene-ethylene terpolymer, a polyethylene-acrylic acid copolymer, and a polypropylene-acrylic acid copolymer, and preferably, the sealant layer 130 may include polypropylene. Since the sealant layer 130 includes the above-described materials, the parts of the sealant layer 130 may be effectively fused to each other by heat, and the electrode assembly, the electrolyte, and the like disposed in the pouch case for a secondary battery may be effectively protected.

The sealant layer 130 may have a thickness of 60-100 µm, specifically 65-95 µm, and more specifically 70-90 µm. When the thickness of the sealant layer 130 satisfies the above numerical range, even when the sealant layer 130 is heated in step (S3) as described later, the sealant layer 130 is not easily melted and sufficient heat energy is supplied so that the defects such as cracks present in the sealant layer 130 may be effectively reduced or removed.

Meanwhile, although not illustrated in the drawings, the substrate layer 110 may include an adhesive layer (not shown). The adhesive layer may be adhered between each layer to improve bonding strength. Accordingly, it is possible to effectively prevent the substrate layer 110 from being separated from the pouch case 100 for a secondary battery.

Thereafter, the pouch exterior 100 for a secondary battery is molded to form a cup part 210 (S2).

When the pouch exterior 100 for a secondary battery is prepared, both ends of the pouch exterior 100 for a secondary battery are fixed using a stripper and a die. While both ends of the pouch exterior for a secondary battery are fixed, the pouch exterior 100 for a secondary battery disposed between both ends is pressurized and molded through a punch.

The speed of molding the pouch exterior 100 for a secondary battery may be 1-100 mm/sec, specifically, 5-50 mm/sec, and more specifically, 10-30 mm/sec. When the molding speed satisfies the numerical range above, the pressure applied to the sealant layer 130 per time is adjusted to an appropriate level, so that the amount of cracks generated in the sealant layer 130 by the molding may be reduced and the whitening phenomenon may be reduced.

When the molding of the pouch exterior 100 for a secondary battery is completed and the pressed punch is removed, a cup part 210 may be formed between both ends of the pouch exterior 100 for a secondary battery. The cup part 210 may include an accommodation space capable of accommodating an electrode assembly and the like therein.

FIG. 2 schematically illustrates a cross-section of the molded pouch exterior for a secondary battery.

Referring to FIG. 2, the molded pouch exterior 200 for a secondary battery may include a cup part 210 and an accommodation space 220 partitioned by the cup part 210. The cup part 210 may be formed by being pressurized by a punch as described above.

The cup part 210 may have a concave shape including the accommodation space therein, but is not necessarily limited thereto, and the cup part 210 may be adjusted in various shapes by changing the shape of the punch as necessary.

The depth d of the cup part 210 may be 4-10 mm, specifically 5-9 mm, and more specifically 5.5-8 mm. The depth d of the cup part 210 may be appropriately adjusted according to the contents accommodated, and even if the depth d of the cup part 210 is formed to be somewhat deep, as described later, the sealant layer 130 disposed in the inner surface of the cup part 210 is heated after the molding, and thus cracks may be reduced and the durability of the manufactured pouch case for a secondary battery may be improved.

Thereafter, the cracks of the sealant layer 130 of the pouch exterior 100 for a secondary battery are reduced (S3).

Specifically, the sealant layer 130 of the pouch exterior 100 for a secondary battery is heated and thus cracks of the sealant layer 130 may be reduced. In this case, the materials contained in the sealant layer 130 may be expanded by heat, and thus the defects such as cracks or voids contained in the sealant layer 130 may be filled. Accordingly, the durability of the pouch case for a secondary battery to be manufactured may be improved.

In particular, when the sealant layer 130 is heated even after the pouch exterior 100 for a secondary battery is already molded, the cracks formed in the sealant layer 130 may be filled by the transferred heat energy. Accordingly, even when the molded pouch exterior 100 for a secondary battery has a low mechanical strength due to the occurrence of whitening phenomenon of the sealant layer 130 by defects such as cracks, the mechanical strength of the sealant layer 130 and/or the pouch exterior 100 for a secondary battery may be improved through step (S3) and used without having to discard the molded pouch exterior 100 for a secondary battery.

When the sealant layer 130 of the pouch exterior 100 for a secondary battery is heated, the surface temperature of the sealant layer 130 may be 40-110 °C, preferably, 50-105 °C, and more preferably, 70-100 °C. When the surface temperature of the sealant layer 130 satisfies the numerical range, the cracks formed in the sealant layer 130 may be reduced or completely removed. When the surface temperature of the sealant layer 130 is too high, the sealant layer 130 may be melted and deformed, and when the surface temperature of the sealant layer 130 is too low, energy may not be sufficiently transferred to the sealant layer 130, and thus the materials contained in the sealant layer 130 may not be expanded and the cracks may not be reduced.

As set out in claim 1, the method of heating is emitting infrared rays to the sealant layer 130. The method of emitting the infrared rays has the advantage that heat transfer is uniform.

The wavelength of infrared rays may be 1-100 µm, and the emitting time of infrared rays may be 1-60 seconds. Preferably, the wavelength of infrared rays may be 2.5-50 µm, and the emitting time of infrared rays may be 4-32 seconds, and preferably 16-32 seconds. When the emitting time of infrared rays satisfies the numerical range, the cracks present inside the sealant layer 130 may be reduced and completely removed while the sealant layer 130 is not melted.

The region to which the heat is applied may be the entire region of the sealant layer 130 disposed on the inner surface of the cup part 210, and in this case, defects such as cracks or microvoids present in the sealant layer 130 may be generally reduced or removed.

In addition, the region to which the heat is applied may be a partial region of the sealant layer 130 disposed on the inner surface of the cup part 210, and specifically, when the region to which the heat is applied is a partial region of the sealant layer 130 bent by the molding in step (S2), the whitening phenomenon may be reduced in the region in which defects such as cracks or microvoids are intensively generated in the pouch exterior 100 for a secondary battery, and the mechanical strength or durability of the sealant layer 130 may be improved.

The region to which the heat is applied may be, for example, at least one of a first region 300A, a second region 300B, and a third region 300C as described below, and preferably, may be the first region 300A.

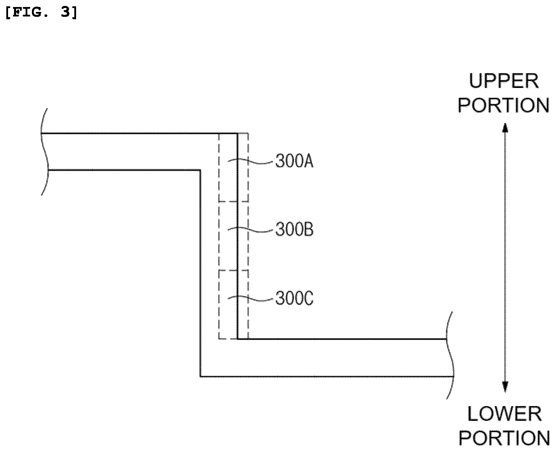

FIG. 3 is an enlarged view illustrating the inner surface of the cup part 210 of the molded pouch exterior 200 for a secondary battery illustrated in FIG. 2.

Referring to FIGS. 1 to 3, the inner surface of the cup part 210 includes the first region 300A, the second region 300B, and the third region 300C. In addition, the first region 300A, the second region 300B, and the third region 300C may be parts of the sealant layer 130, respectively.

The first region 300A represents an upper portion of the inner surface of the cup part 210, the second region 300B represents a central portion of the inner surface of the cup part 210, and the third region 300C represents a lower portion of the inner surface of the cup part 210.

Specifically, the first region 300A may be a region from the uppermost end of the cup part 210 to 0.2d-0.3 d with respect to the depth d of the cup part 210, the second region 300B may be a region from the end point of the first region 300A to 0.4d-0.5 d, and the third region 300C may be a region from the end point of the second region 300B to 0.2d-0.3 d.

The first region 300A is a region in which the cup part 210 starts to be formed, and is a region in which a bending is generated by a punch in step (S2). The first region 300A may be a region in which a plurality of defects such as cracks are generated, and the degree of whitening may be severe, and the mechanical strength may be low.

The second region 300B is a central portion of the inner surface of the cup part 210 and is a region in which no bending is generated, and the third region 300C is a lower portion of the inner surface of the cup 210 and is a region in which no bending is generated. Since the second region 300B and the third region 300C are less deformed by molding than the first region 300A, defects such as cracks are not generated. Accordingly, the degree of whitening of the second region 300B and the third region 300C may be low, and the mechanical strength may be somewhat high.

Meanwhile, the region to which the heat is applied may be the first region 300A which is the upper portion of the inner surface of the cup part 210, and the region to which the infrared rays are emitted, as a specific example of the method for applying the heat, may be the first region 300A which is the upper portion of the inner surface of the cup part 210.

The first region 300A is a region in which a plurality of defects such as cracks are generated due to a large degree of deformation by molding as described above, and the infrared rays are emitted to the first region 300A and thus defects such as cracks or voids present in the sealant layer 130 may be effectively reduced or removed. Accordingly, a relatively weak part of the manufactured pouch case for a secondary battery may be reinforced, and the durability of the pouch case for a secondary battery may be improved.

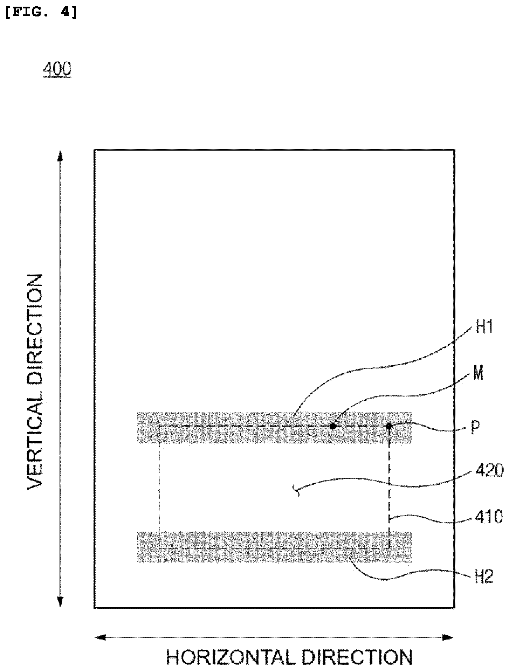

In addition, the region to which the heat is applied may be an edge of the cup part 210 extending in the horizontal direction in the sealant layer 130. Since the edge of the cup part 210 extending in the horizontal direction in the sealant layer 130 is stretched in the vertical direction during the molding, cracks may be more easily formed than other parts, and thus the cracks formed by applying heat after the molding may be intensively removed to improve the durability. FIG. 4 exemplarily illustrates regions H1 and H2 to which the heat is applied.

Hereinafter, examples of the present invention will be described in detail. However, the present invention is not limited to the following examples.

### Example 1

### Step (S1): Preparing a pouch exterior for a secondary battery including a structure in which a substrate layer, a barrier layer, and a sealant layer are sequentially stacked

Prepared was a pouch exterior for a secondary battery including a structure in which a 15 µm-thick nylon layer as a first layer of the substrate layer, a 12 µm-thick polyethylene terephthalate layer as a second layer of the substrate layer, a 40 µm-thick aluminum alloy layer as the barrier layer, and an 80 µm-thick polypropylene layer as the sealant layer were stacked. The adhesive layers were disposed between the first layer and the second layer, and between the barrier layer and the first layer, respectively.

### Step (S2): Molding the pouch exterior for a secondary battery to form a cup part.

After the pouch exterior for a secondary battery was placed so that the substrate layer was placed at a lower portion of a molding apparatus and the sealant layer was placed at an upper portion thereof, both ends of the pouch exterior for a secondary battery were fixed using a stripper and a die, and the pouch exterior for a secondary battery was molded using a punch to form a cup part. In this case, the molding speed was 15 mm/sec, and the molding depth was 5.7 mm.

### Step (S3): Manufacturing the pouch case for a secondary battery by reducing cracks of the sealant layer of the pouch exterior for a secondary battery.

The sealant layer of the molded pouch exterior for a secondary battery was heated to reduce the cracks present in the sealant layer. A method for emitting infrared rays to the sealant layer using an infrared lamp was used in the Example.

The molded pouch exterior for a secondary battery was placed, and the infrared lamp was placed at a position spaced 5 cm from the pouch exterior. The wavelength of the infrared lamp was set to 2.5-50 µm, and the output of the infrared lamp was set to 200 W.

The infrared lamp was used to emit infrared rays to the upper and lower portions (the regions indicated by H1 and H2 in FIG. 4) of the edge of the cup part extending in the horizontal direction of the sealant layer. The emitting time of the infrared rays was 4 seconds, and the infrared rays were emitted so that the surface temperature of the sealant layer reached about 40 °C.

### Example 2

A pouch case for a secondary battery was manufactured in the same manner as in Example 1, except that in step (S3) above, the emitting time of the infrared rays using the infrared lamp was 12 seconds and the infrared rays were emitted so that the surface temperature of the sealant layer reached about 60 °C.

### Example 3

A pouch case for a secondary battery was manufactured in the same manner as in Example 1, except that in step (S3) above, the emitting time of the infrared rays using the infrared lamp was 20 seconds and the infrared rays were emitted so that the surface temperature of the sealant layer reached about 80 °C.

### Example 4

A pouch case for a secondary battery was manufactured in the same manner as in Example 1, except that in step (S3) above, the emitting time of the infrared rays using the infrared lamp was 28 seconds and the infrared rays were emitted so that the surface temperature of the sealant layer reached about 100 °C.

### Example 5

A pouch case for a secondary battery was manufactured in the same manner as in Example 1, except that in step (S3) above, the emitting time of the infrared rays using the infrared lamp was 50 seconds and the infrared rays were emitted so that the surface temperature of the sealant layer reached about 150 °C.

### Comparative Example

A pouch case for a secondary battery was manufactured in the same manner as in Example 1, except that in step (S3) above, the infrared rays were not emitted using the infrared lamp.

### Experimental Example - Crack Level Evaluation

A crack level in the sealant layer of each of the pouch cases for a secondary battery of Examples 1 to 5 and Comparative Example above was evaluated. FIG. 4 shows a location where the crack level is evaluated.

FIG. 4 is a plan view of the molded pouch exterior for a secondary battery; A portion (M) which is spaced about 2 cm in the horizontal direction from one apex of a cup part 410 of each pouch exterior 400 for a secondary battery and corresponds to an upper portion of the inner surface of the cup part 410 was cut into 3 cm x 2.5 cm to be prepared as a specimen. After the specimen was attached onto the slide glass, the cracks were observed through an optical microscope.

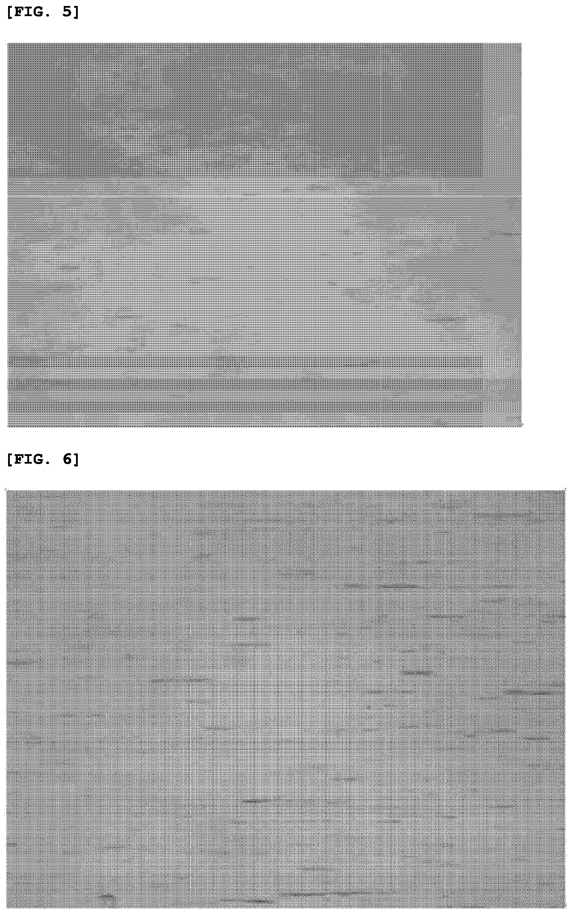

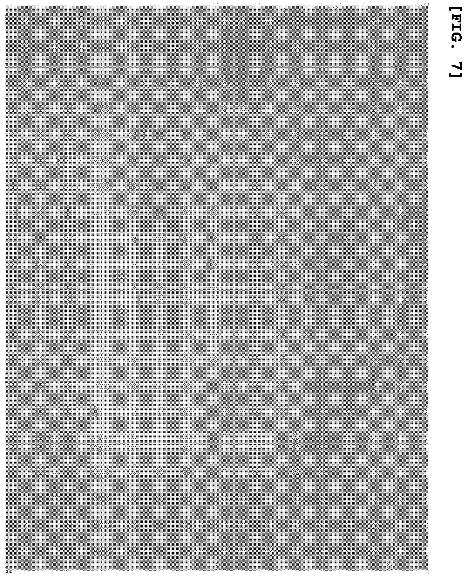

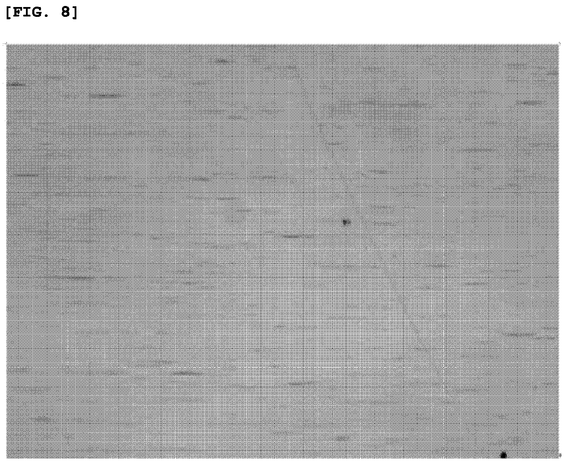

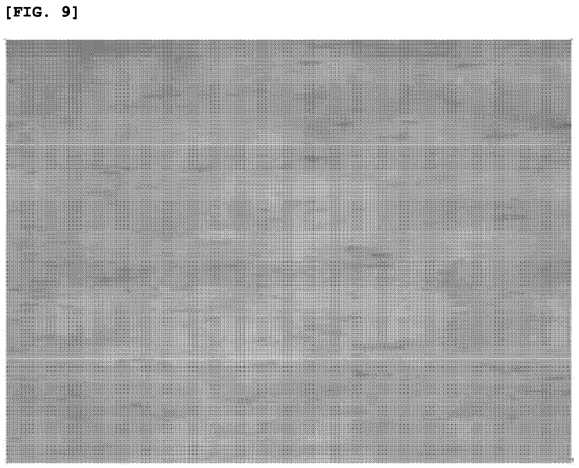

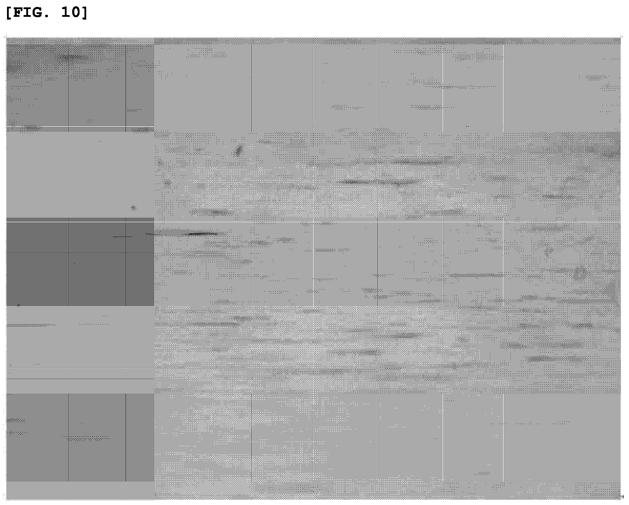

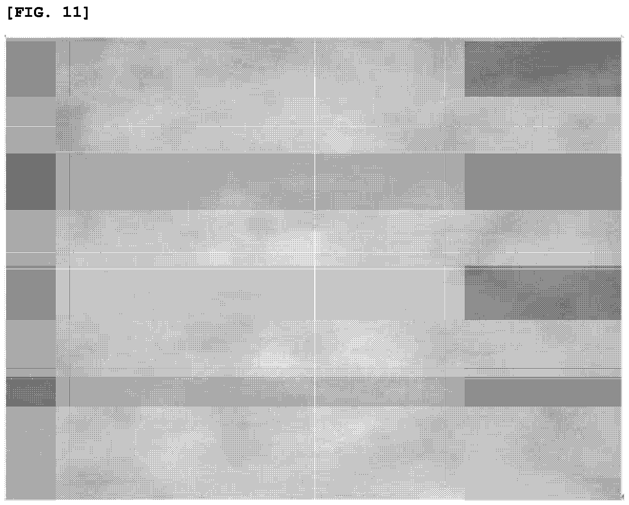

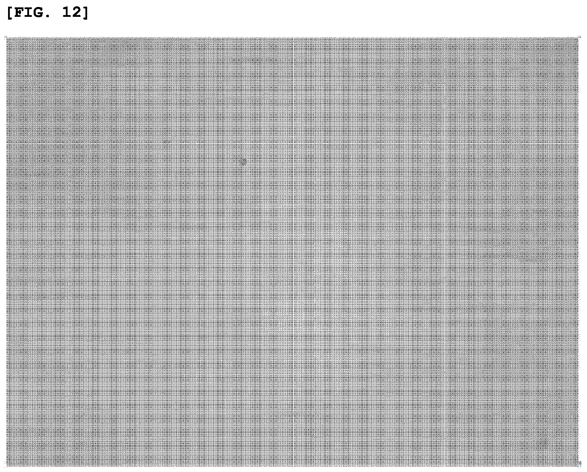

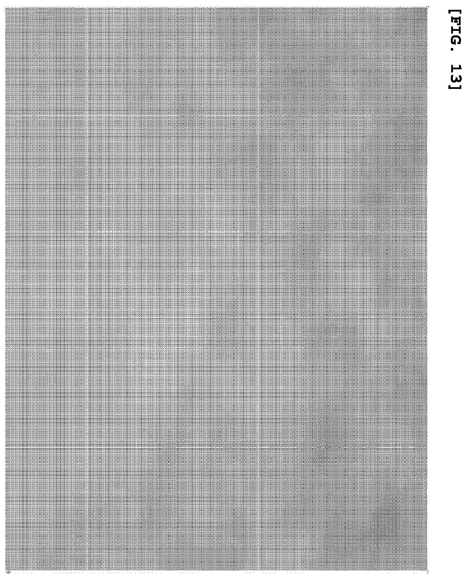

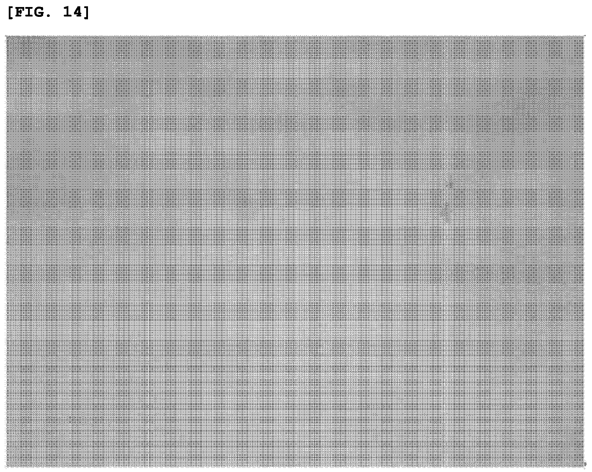

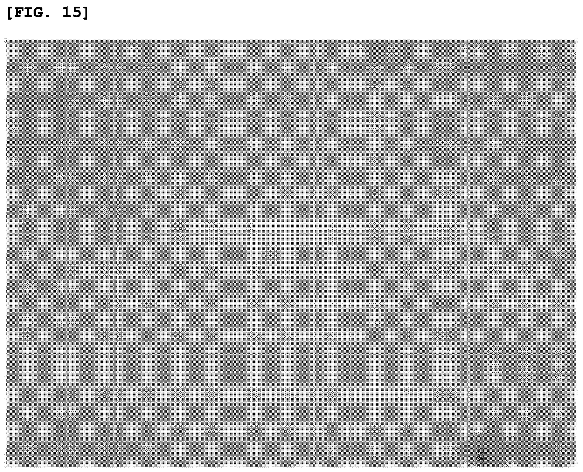

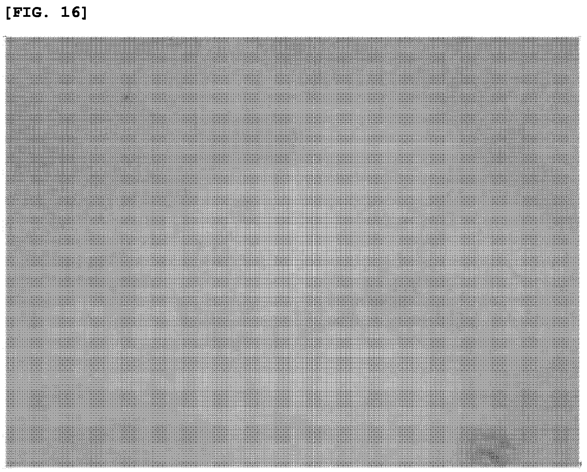

Optical micrographs of Examples 1 to 5 and Comparative Examples are shown in FIGS. 5 to 16, and the experimental results are summarized in Table 1 below.

**[Table 1]**

| | Comparative Example | Example 1 | Example 2 | Example 3 | Example 4 | Example 5 |
|---|---|---|---|---|---|---|
| Emitting time of infrared rays after molding (unit: seconds) | 0 | 4 | 12 | 20 | 28 | 50 |
| Surface temperature of sealant layer after emitting of infrared rays | - | 40 °C | 60 °C | 80 °C | 100 °C | 150 °C |
| Crack level inside sealant layer | 2 | 2 | 1 | 1 | 0 | 0 |
| Crack level of surface of sealant layer | 5 | 4 | 3 | 1 | 0 | 0 |

In Table 1 above, the crack level inside the sealant layer and the crack level on the surface of the sealant layer are expressed as 0 to 5 by checking, with the naked eye, the degree of the cracks through the photographs observed by the optical microscope. Going from 0 to 5 means that there are more cracks.

As a result of the experiment, it was confirmed that in the case of the comparative example, the infrared rays were not emitted after the pouch exterior for a secondary battery was molded, and in the case of Examples 1 and 2, since the emitting time of infrared rays was slightly short, the cracks inside the sealant layer and the cracks on the surface of the sealant layer were partially filled, but were not completely filled but remained.

It was confirmed that in the case of Examples 3 and 4, after the pouch exterior for a secondary battery was molded, the emitting time of infrared rays was appropriately set so that a sufficient level of heat was transferred to the sealant layer, and accordingly, the materials inside the sealant layer were expanded, thereby removing all the cracks.

In the case of Example 5, after the pouch exterior for a secondary battery was molded, infrared rays were emitted so that a sufficient level of heat was transferred to the sealant layer, and accordingly, the materials inside the sealant layer were expanded, thereby removing all the cracks, but physical deformation such as curl was generated in the substrate layer or the barrier layer of the pouch exterior for a secondary battery.

### (Description of the Symbols)

- 100:: Pouch exterior for a secondary battery
- 110:: Substrate layer
- 120:: Barrier layer
- 130:: Sealant layer
- 200:: Pouch exterior for a secondary battery
- 210:: Cup part
- 220:: Accommodation space
- 300A:: First region
- 300B:: Second region
- 300C: Third region
- 400:: Pouch exterior for a secondary battery
- 410:: Cup part
- 420:: Accommodation space
- M:: Measurement site
- P:: Apex

## Claims

1. A method for manufacturing a pouch case for a secondary battery, the method comprising the steps of:
(S1) preparing a pouch exterior (100) for the secondary battery comprising a structure in which a substrate layer (110), a barrier layer (120), and a sealant layer (130) are sequentially stacked;
(S2) molding the pouch exterior (100) for the secondary battery to form a cup part (210, 410);
**characterized in that** the method comprises the step of:
(S3) reducing cracks of the sealant layer (130) of the pouch exterior (100) for the secondary battery, the sealant layer (130) being heated to reduce the cracks of the sealant layer (130) after the cup part (210, 410) is formed by molding the pouch exterior (100) for the secondary battery, the heating being applied by emitting infrared rays to the sealant layer (130).

2. The method of claim 1, wherein in step (S3) above, a surface temperature of the sealant layer (130) is 40°C to 110 °C.

3. The method of claim 1, wherein the infrared rays have a wavelength of 1 to 100 *µ*m, and an emitting time of the infrared rays is 1 to 60 seconds.

4. The method of claim 1, wherein in step (S3) above, a region to which the heating is applied is an edge of the cup part (210, 410) extending in a horizontal direction of the sealant layer (130).

5. The method of claim 1, wherein in step (S2) above, a depth of the cup part (210, 410) is 4mm to 10 mm.

6. The method of claim 1, wherein in step (S2) above, a speed of molding the pouch exterior (100) for the secondary battery is 1 to 100 mm/sec.

7. The method of claim 1, wherein the sealant layer (130) comprises at least one selected from the group consisting of polyethylene, polypropylene, an ethylene propylene copolymer, a polypropylene-butylene-ethylene terpolymer, a polyethylene-acrylic acid copolymer, and a polypropylene-acrylic acid copolymer.

8. The method of claim 1, wherein the sealant layer (130) has a thickness of 60*µ*m to 100µm.

9. The method of claim 1, wherein the barrier layer (120) comprises an aluminum (Al) alloy.

10. The method of claim 1, wherein the barrier layer (120) has a thickness of 20*µ*m to 80*µ*m.

11. The method of claim 1, wherein the substrate layer (110) comprises at least one selected from the group consisting of polyethylene, polypropylene, polyethylene terephthalate, and nylon.

## Patentansprüche

1. Verfahren zur Herstellung eines Beutelgehäuses für eine Sekundärbatterie, wobei das Verfahren die folgenden Schritte umfasst:
(S1) Vorbereiten einer Beutelaußenseite (100) für die Sekundärbatterie, die eine Struktur umfasst, in der eine Substratschicht (110), eine Barriereschicht (120) und eine Siegelschicht (130) aufeinander gestapelt sind;
(S2) Formen der Beutelaußenseite (100) für die Sekundärbatterie, um einen becherförmigen Teil (210, 410) auszubilden;
**dadurch gekennzeichnet, dass** das Verfahren den folgenden Schritt umfasst:
(S3) Reduzieren von Rissen der Siegelschicht (130) der Beutelaußenseite (100) für die Sekundärbatterie, wobei die Siegelschicht (130) erhitzt wird, um die Risse der Siegelschicht (130) zu reduzieren, nachdem der becherförmige Teil (210, 410) durch Formen der Beutelaußenseite (100) für die Sekundärbatterie ausgebildet wurde, wobei die Erhitzung durch Emittieren von Infrarotstrahlen auf die Siegelschicht (130) angewendet wird.

2. Verfahren nach Anspruch 1, wobei in Schritt (S3) oben eine Oberflächentemperatur der Siegelschicht (130) 40 °C bis 110 °C beträgt.

3. Verfahren nach Anspruch 1, wobei die Infrarotstrahlen eine Wellenlänge von 1 bis 100 µm haben und eine Emissionszeit der Infrarotstrahlen 1 bis 60 Sekunden beträgt.

4. Verfahren nach Anspruch 1, wobei in Schritt (S3) oben ein Bereich, auf den die Erhitzung angewendet wird, ein Rand des becherförmigen Teils (210, 410) ist, der sich in einer horizontalen Richtung der Siegelschicht (130) erstreckt.

5. Verfahren nach Anspruch 1, wobei in Schritt (S2) oben eine Tiefe des becherförmigen Teils (210, 410) 4 mm bis 10 mm beträgt.

6. Verfahren nach Anspruch 1, wobei in Schritt (S2) oben eine Formungsgeschwindigkeit der Beutelaußenseite (100) für die Sekundärbatterie 1 bis 100 mm/s beträgt.

7. Verfahren nach Anspruch 1, wobei die Siegelschicht (130) mindestens eines umfasst, das aus der Gruppe ausgewählt ist, die aus Polyethylen, Polypropylen, einem Ethylen-Propylen-Copolymer, einem Polypropylen-Butylen-Ethylen-Terpolymer, einem Polyethylen-Acrylsäure-Copolymer und einem Polypropylen-Acrylsäure-Copolymer besteht.

8. Verfahren nach Anspruch 1, wobei die Siegelschicht (130) eine Dicke von 60 µm bis 100 µm aufweist.

9. Verfahren nach Anspruch 1, wobei die Barriereschicht (120) eine Aluminium(Al)-Legierung umfasst.

10. Verfahren nach Anspruch 1, wobei die Barriereschicht (120) eine Dicke von 20 µm bis 80 µm aufweist.

11. Verfahren nach Anspruch 1, wobei die Substratschicht (110) mindestens eines umfasst, das aus der Gruppe ausgewählt ist, die aus Polyethylen, Polypropylen, Polyethylenterephthalat und Nylon besteht.

## Revendications

1. Procédé de fabrication d'un boîtier de type poche pour une batterie secondaire, le procédé comprenant les étapes consistant à :
(S1) préparer un extérieur de poche (100) pour la batterie secondaire comprenant une structure dans laquelle une couche de substrat (110), une couche barrière (120) et une couche d'étanchéité (130) sont empilées séquentiellement ;
(S2) mouler l'extérieur de poche (100) pour la batterie secondaire afin de former une partie en forme de coupelle (210, 410) ;
**caractérisé en ce que** le procédé comprend l'étape consistant à :
(S3) réduire les fissures de la couche d'étanchéité (130) de l'extérieur de poche (100) pour la batterie secondaire, la couche d'étanchéité (130) étant chauffée pour réduire les fissures de la couche d'étanchéité (130) après que la partie en forme de coupelle (210, 410) est formée par moulage de l'extérieur de poche (100) pour la batterie secondaire, le chauffage étant appliqué par émission de rayons infrarouges sur la couche d'étanchéité (130).

2. Procédé selon la revendication 1, dans lequel, à l'étape (S3) ci-dessus, une température de surface de la couche d'étanchéité (130) est de 40 °C à 110 °C.

3. Procédé selon la revendication 1, dans lequel les rayons infrarouges ont une longueur d'onde de 1 à 100 µm, et une durée d'émission des rayons infrarouges est de 1 à 60 secondes.

4. Procédé selon la revendication 1, dans lequel, à l'étape (S3) ci-dessus, une région à laquelle le chauffage est appliqué est un bord de la partie en forme de coupelle (210, 410) s'étendant dans une direction horizontale de la couche d'étanchéité (130).

5. Procédé selon la revendication 1, dans lequel, à l'étape (S2) ci-dessus, une profondeur de la partie en forme de coupelle (210, 410) est de 4 mm à 10 mm.

6. Procédé selon la revendication 1, dans lequel, à l'étape (S2) ci-dessus, une vitesse de moulage de l'extérieur de poche (100) pour la batterie secondaire est de 1 à 100 mm/s.

7. Procédé selon la revendication 1, dans lequel la couche d'étanchéité (130) comprend au moins un élément choisi dans le groupe constitué par le polyéthylène, le polypropylène, un copolymère d'éthylène-propylène, un terpolymère de polypropylène-butylène-éthylène, un copolymère de polyéthylène-acide acrylique et un copolymère de polypropylène-acide acrylique.

8. Procédé selon la revendication 1, dans lequel la couche d'étanchéité (130) a une épaisseur de 60 µm à 100 µm.

9. Procédé selon la revendication 1, dans lequel la couche barrière (120) comprend un alliage d'aluminium (Al).

10. Procédé selon la revendication 1, dans lequel la couche barrière (120) a une épaisseur de 20 µm à 80 µm.

11. Procédé selon la revendication 1, dans lequel la couche de substrat (110) comprend au moins un élément choisi dans le groupe constitué par le polyéthylène, le polypropylène, le polyéthylène téréphtalate et le nylon.
